# EUROPEAN PATENT SPECIFICATION

(11) **EP 2 021 228 B1**
(45) Date of publication and mention of the grant of the patent: **04.11.2009**
(21) Application number: 07728994.0
(22) Date of filing: 10.05.2007
(51) Int. Cl.: B62J 9/00, E05C 3/14, E05C 19/10, A45C 13/10

(54) **CASE FOR MOTORCYCLES**
MOTORRADKOFFER
COFFRET DE MOTOS

(30) Priority: 11.05.2006 ES 200601204
(43) Date of publication of application: 11.02.2009
(73) Proprietor: NAD, S.L., 08100 Mollet del Vallès (ES)
(72) Inventor: AYALA GONZALEZ, Pedro, 08100 Mollet Del Vallès (ES); PLANAS JORDA, Joan, 08100 Mollet Del Vallès (ES)
(74) Representative: Ponti Sales, Adelaida
(86) International application number: PCT/EP2007/054542
(87) International publication number: WO 2007/131941

(56) References cited:
- EP-A1- 0 737 782
- WO-A-01/12496
- DE-A1- 3 716 445
- DE-A1- 4 230 972
- US-A- 3 240 522

## Description

The present invention refers to a case for motorcycles.

### BACKGROUND OF THE INVENTION

There are known opening and closing devices for motorcycle cases provided with a base or tank and a lid hinged to said base.

Said opening and closing devices comprise a closing element of the lid locking or releasing the lid with respect to the base of the case.

Some of said devices permit to obtain a snap closure between the lid and the base of the case. Said devices usually comprise one or some connecting rods or levers hinged to the base of the case, and a hooking piece to the lid of the case which is hinged at its lower end to said connecting rod(s).

The hooking piece is normally provided with a hook at its upper end which engages with a groove provided at the lid of the case.

Once the hook of said piece is engaged with the groove of the lid, the connecting rod(s) move rotating downwardly, so that the lower end of the hooking piece also moves downwardly. When the connecting rod(s) arrive to the end of the stroke the hooking piece is tightened and presses the lid downwardly by the hook engaged to the lid. Therefore, a snap closure is obtained between the lid and the base of the case preventing plays between both pieces when the lid is closed.

This kind of devices is disclosed in the Spanish Utility Model ES-U1029302-A and in the European patent application EP-A-0 517 265.

The drawback of said devices is that the connecting rod mechanism is relatively complex and large, and requires enough space for the connecting rods to rotate, which detriments the compactness and the appearance of the case.

Patent US 3240522 A refers to a latch for joining two members, which is adapted to engage a strike, the strike comprising a projecting member adapted to be engaged by a latching member, the latch comprises a housing comprising a generally narrow enclosure having at least two open sides, one of the open sides being an access means for the strike, the housing having mounted therein a pivot, a cam rotatably mounted on the pivot, an operating handle mounted to the cam, the cam so constructed and arranged that the operating surface of the cam is remote from the strike access means when the operating handle is positioned within the housing through a remaining open side, a latching member rotatably mounted upon the cam and having stop means so constructed and arranged so as to prevent rotation of the latching means beyond a full opened and full closed position, the latching member defining a strike engaging member having a hook-like configuration adapted to engage the strike, the operating handle and the latching member being generally planar elements.

Patent EP 0737782 A1 refers to a locking device which consists of a hook-shaped catch on the inside of the manhole cover surrounding frame, designed to receive a peg on one end of an inverted L-shaped arm pivoted to a bracket on the underside of the cover. The arm is rotated to release the catch by a lever with a cam-shaped end which is let into a recess in the cover or, from below, by a chain or cable connected to the tip of the arm's upper horizontal section. When the manhole cover is closed, the control lever is fixed in place by a shutter and a bolt which screws into a nut under a plate in the cover recess. The cover can be equipped with a gas cylinder to facilitate lifting.

Patent WO 01/12496 A refers to a suitcase for motorcycles, or similar vehicles, which includes a double function locking device, adapted to assure both the closing of the suitcase and its locking to the vehicle, in which a shaped cam is movable, through key type security means, in two positions that are opposite in respect of a neutral position corresponding to the condition of closing and locking of the suitcase. In such two positions the cam assures, by the rotations of two special levers, the opening and the release of the suitcase from the vehicle. A mechanical stop element is useful to prevent one of the above rotations in order to avoid that the suitcase may unintentionally be released from the vehicle.

Patent DE 3716445 A1 refers to a container, in particular a motorcycle pannier (1), whose fastener is actuated by means of the carrying handle (5). A transmission lever (10) and a closure member (12) are provided for this purpose. The carrying handle (5) can be pivoted and this pivoting movement is transmitted via the transmission lever (10) as a translatory movement to the closure member (12). By means of this translatory movement, locking jaws (14, 15) open or close and release or grip around a fastening bar (17). Additionally, the transmission lever (10) controls a closure hook (6) via a Bowden cable (21), with which closure hook the motorcycle pannier (1) can be fixed on a frame section (2) of a motorcycle frame. The carrying handle (5) can assume three positions. A right-hand, horizontal position for opening the motorcycle pannier (1), an upright position for closing it, and a left-hand, horizontal position for locking the motorcycle pannier (1) on the motorcycle frame.

### DESCRIPTION OF THE INVENTION

The object of the present invention is to solve the drawbacks present in the known devices of the art, providing a case for motorcycles as stated in appended claim 1.

Thanks to said cam, it is provided a mechanism permitting to obtain a snap closure between the lid and the base of said case quickly and easily by a foldable handle. Said mechanism is so much simple and occupies so less space than the connecting rod mechanisms of the state of the art. The connecting rod(s) of the device are placed at the hinge of the handle to the base of the case and are perfectly integrated with the assembly and cannot be seen.

Preferably, said at least one cam comprises a cylindrical body longitudinal to the hinge axis of the handle and placed eccentrically with respect to said axis.

Advantageously, the closing element comprises a part in contact with the external surface of said at least one cam.

Also advantageously, the part of the closing element in contact with the external surface of said at least one cam comprises at least one housing for said at least one cam whose shape is complementary to the external outline of said at least one cam.

According to an embodiment of the present invention, said at least one housing for said at least one cam comprises a cylindrical form of a diameter substantially the same as that of said at least one cam, said at least one cam being placed inside said at least one housing being able to rotate about it.

Preferably, the closing element comprises at least one hook engageable to at least one corresponding rim provided at the lid of the case.

Advantageously, the closing element is hinged to the handle.

Also advantageously, the closing element comprises a knob to rotate the closing element about the handle.

Said knob permits to release the hook from the closing element of the lid of the case.

Preferably, the device comprises elastic means to move the lid of the case in an aperture direction.

According to an embodiment of the present invention, said elastic means to move the lid of the case in the aperture direction comprises a spring at the base of the case which is compressed by the lid when the lid is closed.

Therefore, the lid is released automatically from the base of the case when the closing element releases the lid.

Preferably, the device comprises elastic means to unfold automatically the handle.

Advantageously, said elastic means to unfold automatically the handle comprises at least one torsion spring at the hinge axis of the handle to the base of the case.

Thanks to these features, the handle is unfolded automatically when it is released, not being necessary the manual unfolding by the user.

Preferably, the device comprises stopping means of the movement of the handle.

Advantageously, said stopping means comprises a viscous shock absorber linked to the hinge axis of the handle.

Thanks to these features, a sudden unfolding of the handle is prevented, which could damage the device or the user.

According to an embodiment of the present invention, the device comprises means for locking the handle in a folded position.

Preferably, said means for locking the handle in the folded position comprises a latch fixed to the base of the case engageable to an end of the handle.

Said latch permits to lock the handle when it is folded, so that the lid remains securely closed, preventing accidental openings.

### BRIEF DESCRIPTION OF THE DRAWINGS

To facilitate the description of what have been disclosed previously, some drawings are attached in which, diagrammatically and only as a non-limitative example, a practical case of embodiment of the invention is shown, in which:
Figs. 1 and 2 are perspective views of a motorcycle case according to the invention in a closed and opened state, respectively, including an opening and closing device;
Fig. 3 is a diagrammatical section view of the opening device with the lid of the case closed;
Figs. 4 and 5 are diagrammatical section views showing the operation of the device when the lid of the case is opened;
Figs. 6 and 7 are diagrammatical section views showing the operation of the device when the lid of the case is closed;
Fig. 8 is a perspective view of a module which can be engaged to motorcycle cases comprising the opening and closing device.

### DESCRIPTION OF A PREFERRED EMBODIMENT

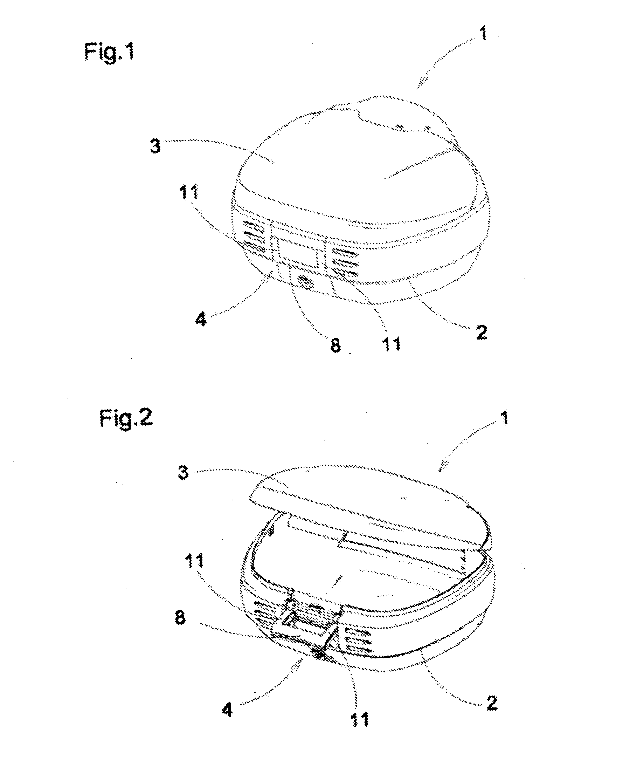

Figs. 1 and 2 show a case 1 for motorcycles comprising a base 2 or tank and a lid 3 hinged to said base 2 at is rear part. The case 1 is adapted to be fixed by the lower part of its base 2 to the frame of a motorcycle (not shown).

The case 1 includes an opening and closing device 4 at the frontal part of the base 2.

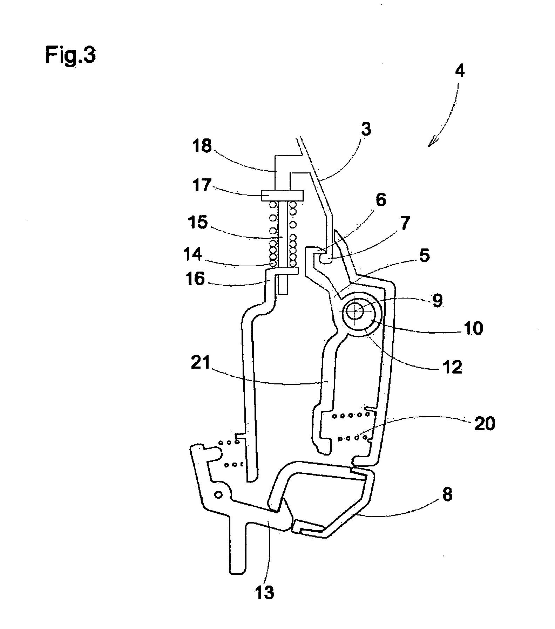

With reference to Figs. 3 to 7, the opening and closing device 4 comprises a closing element, in this case a hinged lever 5, including a hook 6 at its upper end. Said hook 6, in its closing position, is engaged to a complementary rim 7 formed at the lower edge of the lid 3 of the case 1 (Fig. 3), so that it locks the lid 3 preventing its aperture.

The device 4 also comprises a foldable handle 8 to transport the case 1, hinged to the base 2 of the case 1 by a hinge axis 9. Said handle 8 includes a cam 10 formed at the internal face of the free ends of each of its lateral legs 11.

The cam 10 comprises a cylindrical body longitudinal with respect to the axis 9 and it is placed eccentrically with respect to said axis 9. The cam 10 surrounds the axis 9 and can be rotational integral or not with it.

The lever 5 comprises a housing 12 for each cam 10 of the handle 8. Said housing 12 presents a cylindrical shape and complementary to the external outline of said cam 10. The cam 10 remains placed inside said housing 12 being able to rotate about it.

When the handle 8 is in the folded position (Fig. 3), the free end of the handle 8 is placed next to the base 2 of the case 1. The handle 8 is locked by a latch 13 fixed to the base 1 of the case 1 and engageable to the free end of the handle 8.

On the other hand, the device 4 comprises a spring 14, placed around a rod 15, between a wall 16 fixed to the base 2 of the case and an upper end 17 of the rod 15.

Said end 17 is shaped so that it houses a protrusion 18 of the lid 3. When the lid 3 is closed, the protrusion 18 of the lid 3 rests on the end 17, lowering it and compressing the spring 14, so that the spring 14 exerts a force on the lid 3 directed upwardly.

In another possible embodiment, the spring 14 could be placed inside a housing of the base 2 of the case 1, without any rod 15.

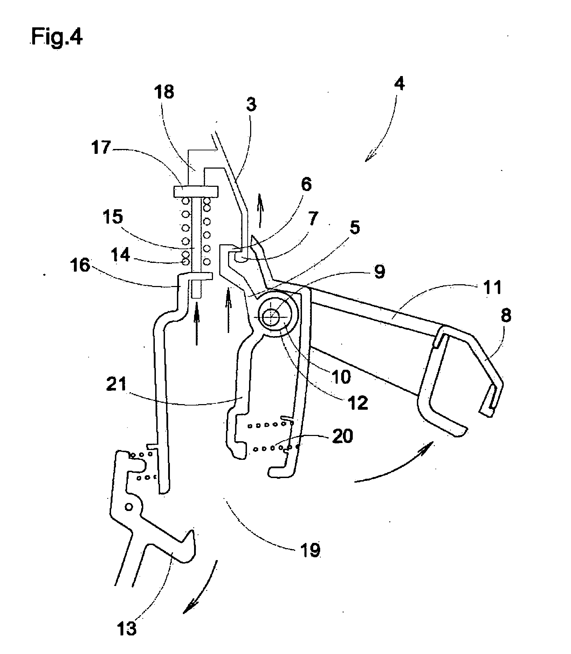

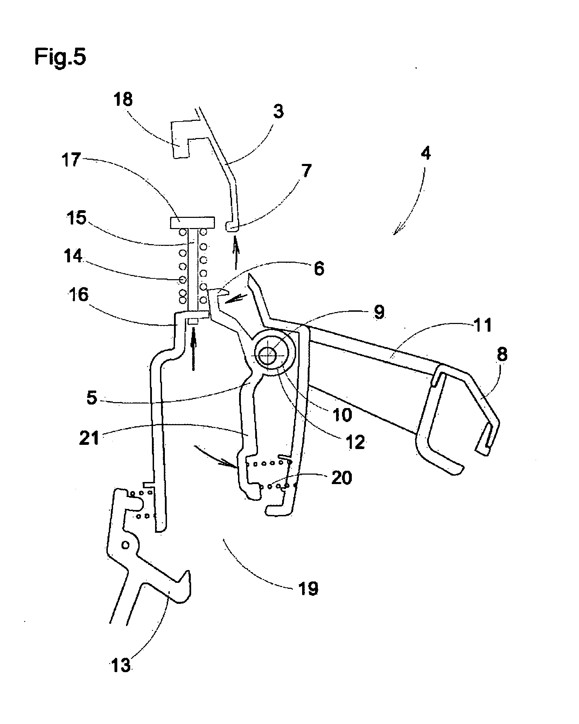

To open the lid 3 of the case 1 (Figs. 4 and 5) the latch 13 is operated, by any suitable means, not shown in the drawings, such as e.g. a lock, so that the free end of the handle 8 releases from said latch 13 and can be unfolded.

Preferably, the handle 8 would include a device to permit the automatic unfolding of it when the latch 13 is operated to release it, e.g. a torsion spring (not shown) associated to the handle 8 and to the base 2 of the case 1 and placed at the hinge axis 9. Furthermore, the device could also include stopping means to prevent a sudden unfolding of the handle 8. Said stopping means could consist in a viscous shock absorber of known kind linked to the handle 8 (not shown).

When the handle 8 moves from the folded position to the unfolded position, the cam 10 rotates integral to the handle 8 with respect to the center of the hinge axis 9. The eccentric rotation of the cam 10 with respect to the axis 9 makes the housing 12 of the lever to follow the same path than the cam 10, and the lever 5 moves vertically upwardly.

The vertical movement of the lever 5 is equivalent to the variation of the distance between the center of the hinge axis 9 and a horizontal plane tangent to the surface of the cam 10 before and after the rotation of the cam 10 and the handle 8.

Therefore, when the handle 8 unfolds the lever 5 and the hook 6 are moved by the cam 10 upwardly. At the same time, the lid 3 also moves upwardly, driven by the spring 14. The spring 14 is decompressed partially, and the pressure between the hook 7 and the rim 7 of the lid 3 decreases.

This decreasing of the pressure between the hook 6 and the rim 7 facilitates the later releasing of both elements.

Then (Fig. 5) the user drives the lever 5 inserting the hand through the aperture 19 until contacts the internal face of the lower end of the lever 5, forming a knob 21. The user pulls the lever 5 moving the knob 21 outside of the case 1, the lever 5 rotating about the cam 10 of the handle 8 and the hook 6 moves out from the rim 7, until both are released.

When the hook 6 and the rim 7 are released, the lid 3 is pushed upwardly by the spring 14 until it is completely decompressed. This permits the lid to be opened automatically when the lever 5 is driven, not being necessary to release manually the hook 6 and the rim 7.

The device 4 comprises a spring 20 placed between the knob 21 of the lever 5 and an external wall fixed to the base 2 of the case, so that when the user releases the knob 21, the lever 5 returns to its rest position, i.e. to the closing position.

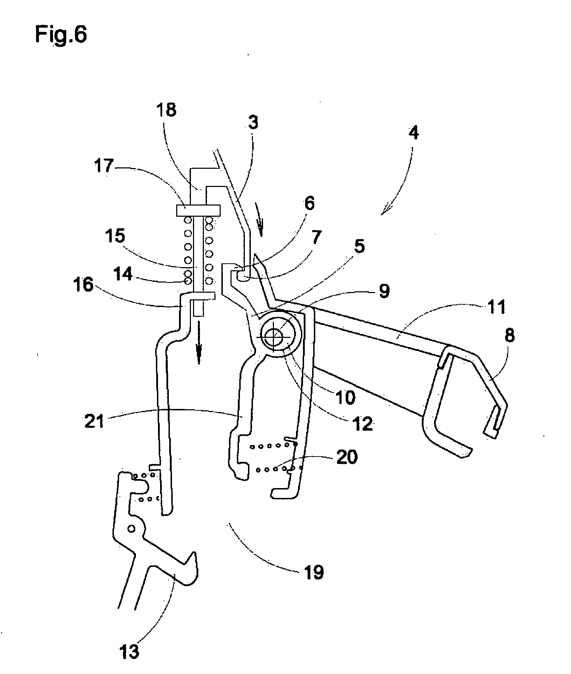

To close the lid 3, it is lowered until the rim 7 remains engaged again with the hook 6 of the lever 5, with the spring 14 partially compressed (Fig. 6).

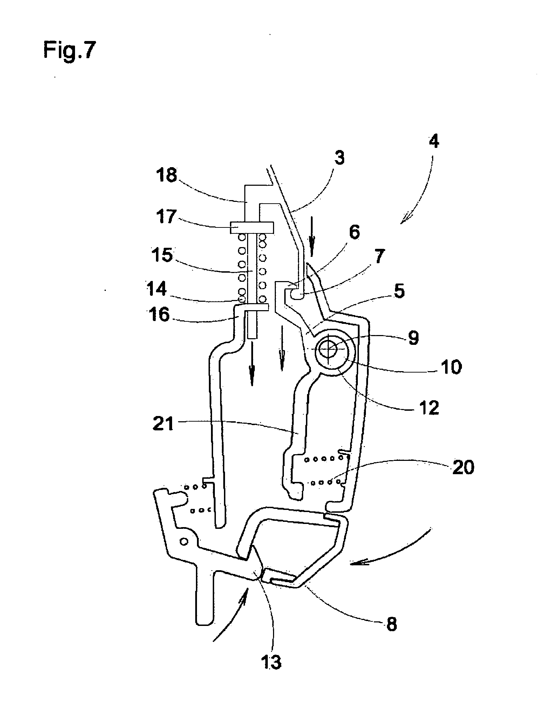

Then, as it is shown in Fig. 7, the handle 8 is folded, the cam 10 is rotated moving it up to its closing position. The cam 10 lowers the lever 5 and the hook 6, which also lowers the rim 7 and the lid 3. The lid 3 compresses more the spring 14, so that there is a tightening between the hook 6 and the rim 7 increasing the pressure between both elements and enhancing the joining of the lid 3 with the base, preventing possible games between both pieces.

The handle 8 remains locked again in the folded position by the latch 13, and the lid 3 remains closed in a tight and secure way.

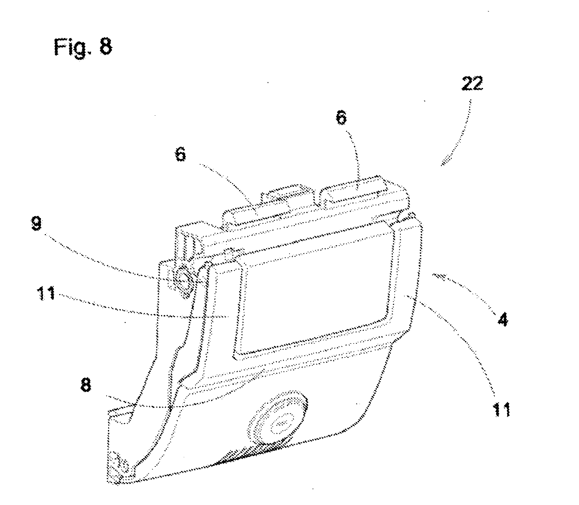

The device 4 can be added directly to the base 2 of a motorcycle case, even though it could also be part of an independent module 22 (Fig. 8) which is fixed to the base 2 of a motorcycle case by screws or other known means. The module 22 can include other closing and opening devices, such as e.g. a lock or joining means of the case to the frame of a motorcycle. Said module 22 can be fixed to cases of different kind or size, permitting to reduce manufacturing costs.

## Claims

1. Case (1) for motorcycles including a base (2), a lid (3) hinged to said base (2), an opening and closing device (4) comprising a closing element (5) of the lid (3) and a handle (8) linked to said closing element (5) and hinged to the base (2) of the case (1), said handle (8) being movable between a folded position corresponding with a first position of the closing element (5), and an unfolded position corresponding to a second position of the closing element (5), **characterized in that** the handle (8) comprises at least one cam (10) linked to the closing element (5) and placed at the hinge axis (9) of the handle (8) to the base (2) of the case (1), so that the movement of the handle (8) between the folded position and the unfolded position results in the rotation of said at least one cam (10), which is adapted to move at the same time said closing element (5) between said first position and said second position.

2. Case (1) according to claim 1, **characterized in that** said at least one cam (10) comprises a cylindrical body longitudinal to the hinge axis (9) of the handle (8) and placed eccentrically with respect to said axis (9).

3. Case (1) according to anyone of the previous claims, **characterized in that** the closing element (5) comprises a part (12) in contact with the external surface of said at least one cam (10).

4. Case (1) according to claim 3, **characterized in that** the part of the closing element (5) in contact with the external surface of said at least one cam (10) comprises at least one housing (12) for said at least one cam (10) whose shape is complementary to the external outline of said at least one cam (10).

5. Case (1) according to claim 4, **characterized in that** said at least one housing (12) for said at least one cam (10) comprises a cylindrical form of a diameter substantially the same as that of said at least one cam (10), said at least one cam (10) being placed inside said at least one housing (12) being able to rotate about it.

6. Case (1) according to anyone of the previous claims, **characterized in that** the closing element (5) comprises at least one hook (6) engageable to at least one corresponding rim (7) provided at the lid (3) of the case (1).

7. Case (1) according to anyone of the previous claims, **characterized in that** the closing element (5) is hinged to the handle (8).

8. Case (1) according to claim 7, **characterized in that** the closing element (5) comprises a knob (21) to rotate the closing element (5) about the handle (8).

9. Case (1) according to anyone of the previous claims, **characterized in that** the device (4) comprises elastic means (14) to move the lid (3) of the case (1) in an aperture direction.

10. Case (1) according to claim 9, **characterized in that** said elastic means to move the lid (3) of the case (1) in the aperture direction comprises a spring (14) at the base (2) of the case (1) which is compressed by the lid (3) when the lid (3) is closed.

11. Case (1) according to anyone of the previous claims, **characterized in that** the device (4) comprises elastic means to unfold automatically the handle (8).

12. Case (1) according to claim 11, **characterized in that** said elastic means to unfold automatically the handle (8) comprises at least one torsion spring at the hinge axis (9) of the handle (8) to the base (2) of the case (1).

13. Case (1) according to anyone of claims 11 or 12, **characterized in that** the device (4) comprises stopping means of the movement of the handle (8).

14. Case (1) according to claim 13, **characterized in that** said stopping means comprises a viscous shock absorber linked to the hinge axis (9) of the handle (8).

15. Case (1) according to anyone of the previous claims, **characterized in that** the device (4) comprises means (13) for locking the handle (8) in a folded position.

16. Case (1) according to claim 15, **characterized in that** said means for locking the handle (8) in the folded position comprises a latch (13) fixed to the base (2) of the case (1) engageable to an end of the handle (8).

## Patentansprüche

1. Koffer (1) für Motorräder mit einer Grundplatte (2), einer Klappe (3), die mit der Grundplatte (2) gelenkig verbunden ist, einer Öffnungs- und Verschlussvorrichtung (4), die ein Verschlusselement (5) der Klappe (3) und einen Griff (8) aufweist, der mit dem Verschlusselement (5) verbunden ist, und der gelenkig mit der Grundplatte (2) des Koffers (1) verbunden ist, wobei der Griff (8) zwischen einer gefalteten Lage, die mit einer ersten Position des Verschlusselements (5) übereinstimmt, und einer ungefalteten Position bewegbar ist, die einer zweiten Position des Verschlusselements (5) entspricht, **dadurch gekennzeichnet, dass** der Griff (8) zumindest einen Nocken (10) aufweist, der mit dem Verschlusselement (5) verbunden ist, und der auf der Drehachse (9) des Griffs (8) an der Grundplatte (2) des Koffers (1) angeordnet ist, so dass die Bewegung des Griffs (8) zwischen der gefalteten Position und der ungefalteten Position zur Rotation des zumindest einen Nockens (10) führt, der geeignet ist, gleichzeitig das Verschlusselement (5) zwischen der ersten Position und der zweiten Position zu bewegen.

2. Koffer (1) nach Anspruch 1, **dadurch gekennzeichnet, dass** der zumindest eine Nocken (10) einen zylindrischen Körper aufweist, der sich längs der Drehachse (9) des Griffs (8) befindet, und der exzentrisch bezüglich der Achse (9) angeordnet ist.

3. Koffer (1) nach einem der vorstehenden Ansprüche, **dadurch gekennzeichnet, dass** das Verschlusselement (5) einen Abschnitt (12) aufweist, der in Kontakt mit der Außenoberfläche des zumindest einen Nockens (10) steht.

4. Koffer (1) nach Anspruch 3, **dadurch gekennzeichnet, dass** der Abschnitt des Verschlusselements (5), der in Berührung mit der Außenfläche des zumindest einen Nockens (10) ist, zumindest ein Gehäuse (12) für den zumindest eine Nocken (10) aufweist, dessen Form komplementär zum äußeren Umfang des zumindest einen Nockens (10) ist.

5. Koffer (1) nach Anspruch 4, **dadurch gekennzeichnet, dass** das zumindest eine Gehäuse (12) für den zumindest einen Nocken (10) eine zylindrische Form mit einem Durchmesser aufweist, der im Wesentlichen gleich dem des zumindest einen Nockens (10) ist, wobei der zumindest eine Nocken (10) innerhalb des zumindest einen Gehäuses (12) angeordnet ist, das in der Lage ist, sich um ihn herum zu drehen.

6. Koffer (1) nach einem der vorstehenden Ansprüche, **dadurch gekennzeichnet, dass** das Verschlusselement (5) zumindest einen Hacken (6) aufweist, der in Eingriff auf zumindest eine entsprechende Kante (7) bringbar ist, die an der Klappe (3) des Koffers (1) angeordnet ist.

7. Koffer (1) nach einem der vorstehenden Ansprüche, **dadurch gekennzeichnet, dass** das Verschlusselement (5) gelenkig mit dem Griff (8) verbunden ist.

8. Koffer (1) nach Anspruch 7, **dadurch gekennzeichnet, dass** das Verschlusselement (5) einen Knopf (21) aufweist, um das Verschlusselement (5) um den Griff (8) herum zu drehen.

9. Koffer (1) nach einem der vorstehenden Ansprüche, **dadurch gekennzeichnet, dass** die Vorrichtung (4) elastische Mittel (14) aufweist, um die Klappe (3) des Koffers (1) in eine Öffnungsrichtung zu bewegen.

10. Koffer (1) nach Anspruch 9, **dadurch gekennzeichnet, dass** die elastischen Mittel, die die Klappe (3) des Koffers (1) in die Öffnungsrichtung bewegen, eine Feder (14) an der Grundplatte (2) des Koffers (1) aufweisen, die durch die Klappe (3) zusammengedrückt wird, wenn die Klappe (3) geschlossen ist.

11. Koffer (1) nach einem der vorstehenden Ansprüche, **dadurch gekennzeichnet, dass** die Vorrichtung (4) elastische Mittel aufweist, um den Griff (8) automatisch zu entfalten.

12. Koffer (1) nach Anspruch 11, **dadurch gekennzeichnet, dass** die elastischen Mittel, um den Griff (8) zu entfalten, zumindest eine Drehfeder an der Drehachse (9) des Griffs (8) aufweisen, der gelenkig mit der Grundplatte (2) des Koffers (1) verbunden ist.

13. Koffer (1) nach Anspruch 11 oder 12, **dadurch gekennzeichnet, dass** die Vorrichtung (4) Anhaltmittel der Bewegung des Griffs (8) aufweist.

14. Koffer (1) nach Anspruch 13, **dadurch gekennzeichnet, dass** die Anhaltmittel einen viskosen Stoßdämpfer aufweisen, der mit der Drehachse (9) des Griffes verbunden ist.

15. Koffer (1) nach einem der vorstehenden Ansprüche, **dadurch gekennzeichnet, dass** die Vorrichtung (4) Mittel zum Verriegeln des Griffs (8) in einer gefalteten Position aufweist.

16. Koffer (1) nach Anspruch 15, **dadurch gekennzeichnet, dass** die Mittel zum Verriegeln des Griffs (8) in der gefalteten Position einen Riegel (13) aufweisen, der an der Grundplatte (2) des Koffers (1) angeordnet ist und der in Eingriff mit einem Ende des Griffs (8) bringbar ist.

## Revendications

1. Coffret (1) pour motos comprenant une base (2), un couvercle (3) articulé par rapport à ladite base (2), un dispositif d'ouverture et de fermeture (4) comprenant un élément de fermeture (5) du couvercle (3) et une poignée (8) reliée audit élément de fermeture (5), et articulée par rapport à la base (2) du coffret (1), ladite poignée (8) étant mobile entre une position pliée correspondant à une première position de l'élément de fermeture (5), et une position dépliée correspondant à une seconde position de l'élément de fermeture (5), **caractérisé en ce que** la poignée (8) comprend au moins une came (10) reliée à l'élément de fermeture (5) et placée au niveau de l'axe d'articulation (9) de la poignée (8) par rapport à la base (2) du coffret (1), de sorte que le mouvement de la poignée (8) entre la position pliée et la position dépliée a pour résultat la rotation de ladite au moins une came (10), qui est adaptée pour déplacer en même temps ledit élément de fermeture (5) entre ladite première position et ladite seconde position.

2. Coffret (1) selon la revendication 1, **caractérisé en ce que** ladite au moins une came (10) comprend un corps cylindrique longitudinal par rapport à l'axe d'articulation (9) de la poignée (8), et placé de manière excentrique par rapport audit axe (9).

3. Coffret (1) selon l'une quelconque des revendications précédentes, **caractérisé en ce que** l'élément de fermeture (5) comprend une partie (12) en contact avec la surface externe de ladite au moins une came (10).

4. Coffret (1) selon la revendication 3, **caractérisé en ce que** la partie de l'élément de fermeture (5) en contact avec la surface externe de ladite au moins une came (10) comprend au moins un boîtier (12) pour ladite au moins une came (10) dont la forme est complémentaire au contour externe de ladite au moins une came (10).

5. Coffret (1) selon la revendication 4, **caractérisé en ce que** ledit au moins un boîtier (12) pour ladite au moins une came (10) comprend une forme cylindrique d'un diamètre essentiellement le même que celui de ladite au moins une came (10), ladite au moins une came (10) étant placée à l'intérieur dudit au moins un boîtier (12) capable de tourner autour de celle-ci.

6. Coffret (1) selon l'une quelconque des revendications précédentes, **caractérisé en ce que** l'élément de fermeture (5) comprend au moins un crochet (6) pouvant être mis en prise avec au moins un rebord correspondant (7) agencé au niveau du couvercle (3) du coffret (1).

7. Coffret (1) selon l'une quelconque des revendications précédentes, **caractérisé en ce que** l'élément de fermeture (5) est articulé par rapport à la poignée (8).

8. Coffret (1) selon la revendication 7, **caractérisé en ce que** l'élément de fermeture (5) comprend un bouton (21) destiné à mettre en rotation l'élément de fermeture (5) autour de la poignée (8).

9. Coffret (1) selon l'une quelconque des revendications précédentes, **caractérisé en ce que** le dispositif (4) comprend des moyens élastiques (14) destinés à déplacer le couvercle (3) du coffret (1) dans une direction d'ouverture.

10. Coffret (1) selon la revendication 9, **caractérisé en ce que** lesdits moyens élastiques destinés à déplacer le couvercle (3) du coffret (1) dans la direction d'ouverture comprennent un ressort (14) au niveau de la base (2) du coffret (1) qui est comprimé par le couvercle (3) lorsque le couvercle (3) est fermé.

11. Coffret (1) selon l'une quelconque des revendications précédentes, **caractérisé en ce que** le dispositif (4) comprend des moyens élastiques destinés à déplier la poignée (8) automatiquement.

12. Coffret (1) selon la revendication 1, **caractérisé en ce que** lesdits moyens élastiques destinés à déplier la poignée (8) automatiquement comprennent au moins un ressort de torsion au niveau de l'axe d'articulation (9) de la poignée (8) par rapport à la base (2) du coffret (1).

13. Coffret (1) selon la revendication 11 ou 12, **caractérisé en ce que** le dispositif (4) comprend des moyens d'arrêt du mouvement de la poignée (8).

14. Coffret (1) selon la revendication 13, **caractérisé en ce que** lesdits moyens d'arrêt comprennent un absorbeur de chocs visqueux relié à l'axe d'articulation (9) de la poignée (8).

15. Coffret (1) selon l'une quelconque des revendications précédentes, **caractérisé en ce que** le dispositif (4) comprend des moyens (13) pour verrouiller la poignée (8) dans une position pliée.

16. Coffret (1) selon la revendication 15**, caractérisé en ce que** lesdits moyens pour verrouiller la poignée (8) dans une position pliée comprennent un loquet (13) fixé à la base (2) du coffret (1), pouvant être mis en prise à une extrémité de la poignée (8).
